# EUROPÄISCHE PATENTSCHRIFT

(11) **EP 1 847 412 B1**
(45) Veröffentlichungstag und Bekanntmachung des Hinweises auf die Patenterteilung: **20.05.2015**
(21) Anmeldenummer: 07006156.9
(22) Anmeldetag: 26.03.2007
(51) Int. Cl.: B60K 6/48, B60K 6/26

(54) **Hybridfahrzeugantriebsstrang**
Hybrid vehicle power transmission
Transmission de véhicule hybride

(30) Priorität: 21.04.2006 DE 102006018697
(43) Veröffentlichungstag der Anmeldung: 24.10.2007
(73) Patentinhaber: Schaeffler Technologies AG & Co. KG, 91074 Herzogenaurach (DE)
(72) Erfinder: Man, Laszlo, Dr., 77833 Ottersweier-Unzhurst (DE)

(56) Entgegenhaltungen:
- WO-A1-00/19585
- DE-A1- 4 323 602

## Beschreibung

Die Erfindung betrifft einen Hybridfahrzeugantriebsstrang, mit einer einen Motorblock und eine Kurbelwelle aufweisenden Verbrennungsmaschine sowie mit einer elektrischen Maschine, die einen mit dem Motorblock verbunden Stator und einen drehbar an dem Stator gelagerten Rotor aufweist, der über eine verstellbare Kupplung mit der Kurbelwelle verbindbar ist.

Ein derartiger Hybridfahrzeugantriebsstrang ist aus der Praxis bekannt. Er weist zusätzlich zu einer Verbrennungsmaschine eine elektrische Maschine auf, die bei Bedarf durch Schließen der Kupplung der Verbrennungsmaschine zugeschaltet werden kann, um ein zusätzliches Antriebsmoment aufzubringen oder als elektrischer Generator zu dienen. Bei geöffneter Kupplung kann der Hybridfahrzeugantriebsstrang auch nur mit der elektrischen Maschine angetrieben werden. Ferner dient die elektrische Maschine als Anlasser für die Verbrennungsmaschine. Um einen schnellen Start der Verbrennungsmaschine zu ermöglichen, ist die Kupplung zwischen der Kurbelwelle und einem mit dem Rotor der elektrischen Maschine fest verbundenen Schwungrad der Verbrennungsmaschine angeordnet. Die Kupplung muss sehr hohe Drehmomente übertragen können, da das an der Kurbelwelle abgegebene Drehmoment der Verbrennungsmaschine über die Kupplung zu der Schwungscheibe weitergeleitet wird. Der Hybridfahrzeugantriebsstrang ermöglicht gegenüber einem Antriebsstrang, der nur über eine Verbrennungsmaschine angetrieben wird, einen geringeren Kraftstoffverbrauch und einen reduzierten Schadstoffausstoß. Ein Nachteil des Hybridfahrzeugantriebsstrangs besteht jedoch noch darin, dass die Kupplung relativ schnell verscheißt.

DE4323602, die den Oberbegriff des Anspruchs 1 offenbart, zeigt einen Hybridfahrzeugantriebsstrang, mit einer einen Motorblock und eine Kurbelwelle aufweisenden Verbrennungsmaschine sowie mit einer elektrischen Maschine, die einen mit dem Motorblock verbunden Stator und einen drehbar an dem Stator gelagerten Rotor aufweist, der über eine verstellbare Kupplung mit der Kurbelwelle verbindbar ist.

WO0019585 zeigt einen Hybridfahrzeugantriebsstrang, wobei der Stator der elektrischen Maschine über mindestens ein elastisches Lagerteil nachgiebig an dem Motorblock gelagert ist.

Es besteht deshalb die Aufgabe, einen Hybridfahrzeugantriebsstrang der eingangs genannten Art zu schaffen, der bei einem einfachen Aufbau einen geringen Verschleiß der Kupplung und somit entsprechend lange Wartungsintervalle ermöglicht.

Diese Aufgabe wird durch die Merkmale des Anspruchs 1 gelöst.

Der Erfindung liegt die Erkenntnis zu Grunde, dass durch Bauteil- und Montagetoleranzen sowie die dynamische Bewegung der Kurbelwelle zwischen der Rotationsachse der Kurbelwelle und der Rotationsachse des Rotors bzw. eines damit in Antriebsverbindung stehenden rotierenden Teils ein radialer Versatz und/oder Winkelfehler auftreten kann. Der Versatz kann in der Praxis mehrere zehntel Millimeter betragen. Dieser Versatz bzw. Winkelfehler wird dadurch ausgeglichen, dass der Stator der elektrischen Maschine mittels des elastischen Lagerteils weich an dem Motorblock gelagert ist. In vorteilhafter Weise wird dabei über das elastische Lagerteil nur das im Verhältnis zu dem Drehmoment der Verbrennungsmaschine relativ kleine Drehmoment der elektrischen Maschine übertragen, so dass das mindestens eine elastische Lagerteil entsprechend kompakt und kostengünstig dimensioniert sein kann. Die Elastizität des Lagerteils ist bevorzugt derart auf den Versatz und/oder den Winkelfehler abgestimmt, dass dieser im Wesentlichen nur durch das elastische Lagerteil ausgeglichen wird. Somit entsteht durch den Versatz und/oder Winkelfehler an der Kupplung kein Verschleiß.

Bei einer bevorzugten Ausführungsform der Erfindung ist die elektrische Maschine etwa koaxial zur Rotationsachse der Kurbelwelle angeordnet. Der Hybridfahrzeugantriebsstrang ermöglicht dann eine besonders kompakte Bauweise.

Bei einer anderen vorteilhaften Ausgestaltung der Erfindung ist die Rotationsachse des Rotors parallel zur Rotationsachse der Kurbelwelle beabstandet, wobei der Rotor über einen Riemenantrieb mit der Kurbelwelle in Antriebsverbindung steht. Die elektrische Maschine kann in diesem Fall seitlich neben der Verbrennungsmaschine angeordnet sein.

Das elastische Lagerteil kann eine Blattfeder sein, die an ihrem einen Ende mit dem Motorblock verbunden ist und an ihrem anderen Ende am Stator angreift. Dabei kann durch die Blattfeder insbesondere ein Winkelversatz zwischen der Rotationsachse der Kurbelwelle und derjenigen der elektrischen Maschine ausgeglichen werden.

Bei einer bevorzugten Ausführungsform der Erfindung weist das elastische Lagerteil ein Elastomer-Element, insbesondere ein Gummi-Element auf, das mit seinem einen Ende mit dem Motorblock und mit seinem anderen Ende mit dem Stator verbunden ist. Das Lagerteil ist dann besonders kostengünstig herstellbar.

Vorteilhaft ist, wenn das elastische Lagerteil eine Sandwichstruktur mit mindestens einer zwischen zwei Befestigungsflanschen angeordneten, flächigen elastischen Schicht aufweist, und wenn der eine Befestigungsflansch direkt oder indirekt an dem Motorblock und der andere Befestigungsflansch direkt oder indirekt an dem Stator angreift. Das elastische Lagerteil kann dann sehr kompakte Abmessungen aufweisen.

Zweckmäßigerweise ist das Lagerteil etwa plattenförmig ausgebildet und vorzugsweise in einer normal zur Rotationsachse der Kurbelwelle verlaufenden Ebene angeordnet. Das Lagerteil ist dann noch einfacher und kostengünstiger herstellbar.

Bei einer bevorzugten Ausführungsform der Erfindung ist die elastische Schicht eine Gummischicht, die an ihrer einen Seite auf den einen Befestigungsflansch und an ihrer anderen Seite auf den anderen Befestigungsflansch aufvulkanisiert ist. Das Lagerteil kann dann das von der elektrischen Maschine aufgebrachte Drehmoment besonders gut gegen den Motorblock der Verbrennungsmaschine abstützen.

An dem statorseitigen Befestigungsflansch ist eine zu der Rotationsachse der Kurbelwelle etwa koaxial angeordnete Lagerhülse angeformt und an dieser Lagerhülse ist der Rotor drehbar gelagert, vorzugsweise mittels einer Wälzlagerung. Der Hybridfahrzeugantriebsstrang ermöglicht dann einen besonders einfachen, kompakten und robusten Aufbau. Da die Lagerhülse einstückig mit dem Befestigungsflansch verbunden ist, lässt sich der Hybridfahrzeugantriebsstrang bei der Fertigung einfach und schnell montieren. Die Lagerhülse und der Befestigungsflansch sind bevorzugt als Biegestanzteil ausgestaltet.

Bei einer bevorzugten Ausgestaltung der Erfindung weist die Kupplung ein Ausrückelement auf, das mit einem hydraulischen Nehmerelement in Antriebsverbindung steht, wobei das Nehmerelement zwischen einem weichmagnetischen Kern des Stators und der Lagerhülse angeordnet und über eine flexible Hydraulikleitung und/oder einen Hydraulikschlauch mit einem hydraulischen Geberelement verbunden ist. Das Nehmerelement ist also platzsparend in das Innere der elektrischen Maschine integriert.

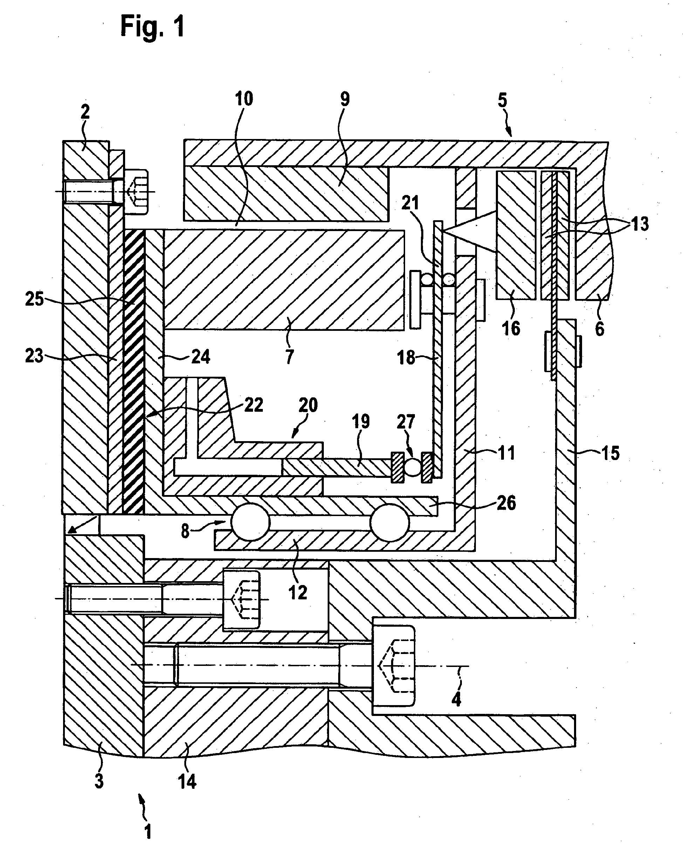

Nachfolgend ist ein Ausführungsbeispiel der Erfindung anhand der Zeichnung näher erläutert. Die einzige Figur 1 zeigt einen Teilquerschnitt durch einen Hybridfahrzeugantriebsstrang, wobei die Querschnittsebene durch die Rotationsachse einer Kurbelwelle und einen radial dazu verlaufenden Vektor aufgespannt wird.

Ein im Ganzen mit 1 bezeichneter, in Fig. 1 nur teilweise dargestellter Hybridfahrzeugantriebsstrang weist eine als Hubkolbenmotor ausgebildete Verbrennungsmaschine mit einem Motorblock 2 auf, an dem eine Kurbelwelle 3 um eine Rotationsachse 4 drehbar gelagert ist. Die Kurbelwelle 3 ist über eine zwischen einer Offen- und einer Schließstellung verstellbaren Trenn-Kupplung 5 mit der Eingangswelle eines in der Zeichnung nur teilweise dargestellten Wechselgetriebes 6 verbindbar.

Zwischen dem Motorblock 2 und dem Wechselgetriebe 6 ist eine elektrische Maschine angeordnet, die einen Stator 7 und einen mittels einer Wälzlagerung 8 drehbar an daran gelagerten Rotor 9 aufweist. Stator 7 und Rotor 9 sind koaxial zur Rotationsachse 4 der Kurbelwelle 3 angeordnet.

Der Stator weist einen weichmagnetischen Kern mit Zähnen auf, die mit einer in der Zeichnung nicht näher dargestellten Wicklung bewickelt sind. Die Wicklung ist über eine Ansteuereinrichtung mit einem Akku elektrisch verbunden. Wenn die elektrische Maschine im Motorbetrieb arbeitet, wird durch entsprechendes Bestromen der Wicklung ein magnetisches Drehfeld erzeugt, das über einen Luftspalt 10 mit dem Rotor 9 zusammenwirkt, um diesen anzutreiben.

Der Rotor 9 weist an seinem Innenumfang eine Abfolge von abwechselnd in zueinander entgegengesetzte Richtungen magnetisierten permanentmagnetischen Polen auf. Die Pole sind in an sich bekannter Weise durch ein Joch miteinander verbunden. Das Joch ist über ein Maschinengehäuse etwa U-förmig mit einer inneren Lagerhülse 12 der Wälzlagerung 8 verbunden.

Die Kupplung 5 hat einen etwa ringscheibenförmigen Reibbelag 13, der an einem auf einem Kurbelwellenzapfen 14 angeordneten, drehfest mit diesem verbundenen Trägerteil 15 befestigt ist. Der Reibbelag 13 ist zwischen einer axial verstellbaren Druckplatte 16 und einer etwa ringscheibenförmigen, mit der Eingangswelle des Wechselgetriebes 6 verbundenen Widerlagerplatte 17 einklemmbar, um eine reibschlüssige Verbindung zwischen dem Rotor, der Kurbelwelle und der Getriebeeingangswelle herzustellen.

An seiner dem Reibbelag 13 abgewandten Rückseite weist die Druckplatte 16 eine Widerlagerstelle auf, die gegen den äußeren Randbereich eines als Tellerfeder ausgebildeten Ausrückelements 18 abgestützt ist. Am inneren Randbereich des Ausrückelements 18 greift ein auf das Trägerteil 15 zu und von diesem weg verstellbares Druckelement 19 eines hydraulischen Nehmerelements 20 an. Das Nehmerelement 20 ist über eine in der Zeichnung nicht näher dargestellten Hydraulikschlauch mit einem hydraulischen Geberelement verbunden.

Zwischen dem Druckelement 19 und dem Ausrückelement 18 ist ein Kugellager 27 angeordnet. Ein Gehäuse des Nehmerelements 20 ist an dem Stator 7 befestigt. Zwischen seinem inneren Randbereich und seinem äußeren Randbereich ist das Ausrückelement 18 an einer Lagerstelle 21 gelenkig gegen das Maschinengehäuse 11 der elektrischen Maschine abgestützt.

Der Stator 7 der elektrischen Maschine ist über ein elastisches Lagerteil 22 nachgiebig an dem Motorblock 2 gelagert. Das Lagerteil 22 weist eine Sandwichstruktur mit einer zwischen zwei Befestigungsflanschen 23, 24 angeordneten, scheibenförmigen Gummischicht 25 auf. Diese sind auf die Befestigungsflansche 23, 24 aufvulkanisiert. Ein erster Befestigungsflansch 23 ist mit dem Motorblock 2 verschraubt und ein zweiter Befestigungsflansch 24 mit dem Stator 7 verbunden. Die Befestigungsflansche 23, 24 sind jeweils in einer etwa normal zur Rotationsachse 4 der Kurbelwelle 3 verlaufenden Ebene angeordnet Der zweite Befestigungsflansch 24 ist einstückig mit einer äußeren Lagerhülse 26 ausgebildet.

Mittels des nachgiebigen Lagerteils 22 können ein radialer Versatz der Rotationsachse des Rotors 9 zur Rotationsachse 4 der Kurbelwelle 3 und/oder Winkelfehler zwischen diesen Achsen ausgeglichen werden.

Der Hybridfahrzeugantriebsstrang hat also eine Verbrennungsmaschine (1) und eine elektrischen Maschine. Die Verbrennungsmaschine (1) weist einen Motorblock (2) und eine Kurbelwelle (3) auf. Die elektrische Maschine hat einen mit dem Motorblock (2) verbunden Stator (7) und einen drehbar an dem Stator (7) gelagerten Rotor (9). Dieser ist über eine verstellbare Kupplung mit der Kurbelwelle (3) in Drehverbindung bringbar. Zum Ausgleich eines Achsversatzes und/oder einer Verkippung ist der Stator (7) der elektrischen Maschine über mindestens ein elastisches Lagerteil (22) nachgiebig an dem Motorblock (3) gelagert.

### Bezugszeichenliste

- 1: Verbrennungsmaschine
- 2: Motorblock
- 3: Kurbelwelle
- 4: Rotationsachse
- 5: Kupplung
- 6: Wechselgetriebe
- 7: Stator
- 8: Wälzlagerung
- 9: Rotor
- 10: Luftspalt
- 11: Maschinengehäuse
- 12: innere Lagerhülse
- 13: Reibbelag
- 14: Kurbelwellenzapfen
- 15: Trägerteil
- 16: Druckplatte
- 17: Widerlagerplatte
- 18: Ausrückelement
- 19: Druckelement
- 20: hydraulisches Nehmerelement
- 21: Lagerstelle
- 22: Lagerteil
- 23: erster Befestigungsflansch
- 24: zweiter Befestigungsflansch
- 25: Gummischicht
- 26: äußere Lagerhülse
- 27: Kugellager

## Patentansprüche

1. Hybridfahrzeugantriebsstrang, mit einer einen Motorblock (2) und eine Kurbelwelle (3) aufweisenden Verbrennungsmaschine (1) sowie mit einer elektrischen Maschine, die einen mit dem Motorblock (2) verbunden Stator (7) und einen drehbar an dem Stator (7) gelagerten Rotor (9) aufweist, der über eine verstellbare Kupplung (5) mit der Kurbelwelle verbindbar ist, **dadurch gekennzeichnet, dass** der Stator (7) der elektrischen Maschine über mindestens ein elastisches Lagerteil (22) nachgiebig an dem Motorblock (2) gelagert ist, und dass an den statorseitigen Befestigungsflansch (24) eine zur Rotationsachse (4) der Kurbelwelle (3) etwa koaxial angeordnete Lagerhülse (26) angeformt ist, und dass an dieser Lagerhülse (26) der Rotor (9) drehbar gelagert ist.

2. Hybridfahrzeugantriebsstrang nach Anspruch 1, **dadurch gekennzeichnet, dass** die elektrische Maschine etwa koaxial zur Rotationsachse (4) der Kurbelwelle (3) angeordnet ist.

3. Hybridfahrzeugantriebsstrang nach Anspruch 1 oder 2, **dadurch gekennzeichnet, dass** die Rotationsachse des Rotors (9) parallel zur Rotationsachse (4) der Kurbelwelle (3) beabstandet ist, und dass der Rotor (9) über einen Riemenantrieb mit der Kurbelwelle (3) in Antriebsverbindung steht.

4. Hybridfahrzeugantriebsstrang nach einem der Ansprüche 1 bis 3, **dadurch gekennzeichnet, dass** das elastische Lagerteil (22) eine Blattfeder ist, die an ihrem einen Ende mit dem Motorblock (2) verbunden ist und an ihrem anderen Ende am Stator (7) angreift.

5. Hybridfahrzeugantriebsstrang nach einem der Ansprüche 1 bis 4, **dadurch gekennzeichnet, dass** das elastische Lagerteil ein Elastomer-Element, insbesondere ein Gummi-Element aufweist, das mit seinem einen Ende mit dem Motorblock und mit seinem anderen Ende mit dem Stator verbunden ist.

6. Hybridfahrzeugantriebsstrang nach einem der Ansprüche 1 bis 5, **dadurch gekennzeichnet, dass** das elastische Lagerteil (22) eine Sandwichstruktur mit mindestens einer zwischen zwei Befestigungsflanschen (23, 24) angeordneten, flächigen elastischen Schicht aufweist, und dass der eine Befestigungsflansch (23) direkt oder indirekt an dem Motorblock (2) und der andere Befestigungsflansch (24) direkt oder indirekt an dem Stator (7) angreift.

7. Hybridfahrzeugantriebsstrang nach einem der Ansprüche 1 bis 6, **dadurch gekennzeichnet, dass** das Lagerteil (22) etwa plattenförmig ausgebildet ist und vorzugsweise in einer normal zur Rotationsachse (4) der Kurbelwelle (3) verlaufenden Ebene angeordnet ist.

8. Hybridfahrzeugantriebsstrang nach einem der Ansprüche 1 bis 7, **dadurch gekennzeichnet, dass** die elastische Schicht eine Gummischicht (25) ist, die an ihrer einen Seite auf den einen Befestigungsflansch (23) und an ihrer anderen Seite auf den anderen Befestigungsflansch (24) aufvulkanisiert ist.

9. Hybridfahrzeugantriebsstrang nach einem der Ansprüche 1 bis 8, **dadurch gekennzeichnet, dass** die Kupplung (5) ein Ausrückelement (18) aufweist, das mit einem hydraulischen Nehmerelement (20) in Antriebsverbindung steht, und dass das Nehmerelement (20) zwischen einem weichmagnetischen Kern des Stators (7) und der Lagerhülse (26) angeordnet und über eine flexible Hydraulikleitung und/oder einen Hydraulikschlauch mit einem hydraulischen Geberelement verbunden ist.

## Claims

1. Hybrid vehicle drive train, having an internal combustion engine (1) which has an engine block (2) and a crankshaft (3) and having an electric machine which has a stator (7) which is connected to the engine block (2) and a rotor (9) which is mounted rotatably on the stator (7) and can be connected to the crankshaft via an adjustable clutch (5), **characterized in that** the stator (7) of the electric machine is mounted resiliently on the engine block (2) via at least one elastic bearing part (22), and **in that** a bearing sleeve (26) which is arranged approximately coaxially with respect to the rotational axis (4) of the crankshaft (3) is moulded integrally onto the stator-side fastening flange (24), and **in that** the rotor (9) is mounted rotatably on the said bearing sleeve (26).

2. Hybrid vehicle drive train according to Claim 1, **characterized in that** the electric machine is arranged approximately coaxially with respect to the rotational axis (4) of the crankshaft (3).

3. Hybrid vehicle drive train according to Claim 1 or 2, **characterized in that** the rotational axis of the rotor (9) is spaced apart from and in parallel with the rotational axis (4) of the crankshaft (3), and **in that** the rotor (9) is drive-connected to the crankshaft (3) via a belt drive.

4. Hybrid vehicle drive train according to one of Claims 1 to 3, **characterized in that** the elastic bearing part (22) is a leaf spring which is connected at its one end to the engine block (2) and at its other end acts on the stator (7).

5. Hybrid vehicle drive train according to one of Claims 1 to 4, **characterized in that** the elastic bearing part has an elastomer element, in particular a rubber element, which is connected by way of its one end to the engine block and by way of its other end to the stator.

6. Hybrid vehicle drive train according to one of Claims 1 to 5, **characterized in that** the elastic bearing part (22) has a sandwich structure with at least one flat elastic layer which is arranged between two fastening flanges (23, 24), and **in that** the one fastening flange (23) acts directly or indirectly on the engine block (2) and the other fastening flange (24) acts directly or indirectly on the stator (7).

7. Hybrid vehicle drive train according to one of Claims 1 to 6, **characterized in that** the bearing part (22) is of approximately plate-shaped configuration and is preferably arranged in a plane which runs perpendicularly with respect to the rotational axis (4) of the crankshaft (3).

8. Hybrid vehicle drive train according to one of Claims 1 to 7, **characterized in that** the elastic layer is a rubber layer (25) which is vulcanized on its one side onto the one fastening flange (23) and on its other side onto the other fastening flange (24).

9. Hybrid vehicle drive train according to one of Claims 1 to 8, **characterized in that** the clutch (5) has a disengagement element (18) which is drive-connected to a hydraulic slave element (20), and **in that** the slave element (20) is arranged between a soft magnetic core of the stator (7) and the bearing sleeve (26) and is connected to a hydraulic master element via a flexible hydraulic line and/or a hydraulic hose.

## Revendications

1. Transmission de véhicule hybride, comprenant un moteur à combustion interne (1) présentant un bloc moteur (2) et un vilebrequin (3) et comprenant une machine électrique qui présente un stator (7) connecté au bloc moteur (2) et un rotor (9) supporté à rotation sur le stator (7), lequel peut être connecté au vilebrequin par le biais d'un embrayage réglable (5), **caractérisée en ce que** le stator (7) de la machine électrique est supporté de manière flexible sur le bloc moteur (2) par le biais d'au moins une partie de palier élastique (22) et **en ce qu'**une douille palier (26) disposée approximativement coaxialement par rapport à l'axe de rotation (4) du vilebrequin (3) est façonnée au niveau de la bride de fixation (24) du côté du stator, et **en ce que** le rotor (9) est supporté à rotation sur cette douille palier (26).

2. Transmission de véhicule hybride selon la revendication 1, **caractérisée en ce que** la machine électrique est disposée approximativement coaxialement par rapport à l'axe de rotation (4) du vilebrequin (3).

3. Transmission de véhicule hybride selon la revendication 1 ou 2, **caractérisée en ce que** l'axe de rotation du rotor (9) est espacé parallèlement à l'axe de rotation (4) du vilebrequin (3) et **en ce que** le rotor (9) est en liaison d'entraînement avec le vilebrequin (3) par le biais d'un entraînement par courroie.

4. Transmission de véhicule hybride selon l'une quelconque des revendications 1 à 3, **caractérisée en ce que** la partie de palier élastique (22) est un ressort à lame qui est connecté à l'une de ses extrémités au bloc moteur (2) et qui vient en prise à son autre extrémité avec le stator (7).

5. Transmission de véhicule hybride selon l'une quelconque des revendications 1 à 4, **caractérisée en ce que** la partie de palier élastique présente un élément en élastomère, en particulier un élément en caoutchouc, qui est connecté par l'une de ses extrémités au bloc moteur et par son autre extrémité au stator.

6. Transmission de véhicule hybride selon l'une quelconque des revendications 1 à 5, **caractérisée en ce que** la partie de palier élastique (22) présente une structure en sandwich avec au moins une couche élastique plate disposée entre deux brides de fixation (23, 24), et **en ce que** l'une des brides fixation (23) vient en prise directement ou indirectement avec le bloc moteur (2) et l'autre bride de fixation (24) vient en prise directement ou indirectement avec le stator (7).

7. Transmission de véhicule hybride selon l'une quelconque des revendications 1 à 6, **caractérisée en ce que** la partie de palier (22) est réalisée approximativement en forme de plaque et est disposée de préférence dans un plan s'étendant perpendiculairement à l'axe de rotation (4) du vilebrequin (3).

8. Transmission de véhicule hybride selon l'une quelconque des revendications 1 à 7, **caractérisée en ce que** la couche élastique est une couche de caoutchouc (25) qui est vulcanisée au niveau de l'un de ses côtés sur l'une des brides de fixation (23) et au niveau de son autre côté sur l'autre bride de fixation (24).

9. Transmission de véhicule hybride selon l'une quelconque des revendications 1 à 8, **caractérisée en ce que** l'embrayage (5) présente un élément de débrayage (18) qui est en liaison d'entraînement avec un élément récepteur hydraulique (20), et **en ce que** l'élément récepteur (20) est disposé entre un noyau magnétique doux du stator (7) et la douille palier (26) et est connecté à un élément hydraulique maître par le biais d'une conduite hydraulique flexible et/ou d'un tuyau hydraulique.
